# EUROPEAN PATENT APPLICATION

(11) **EP 4 560 856 A1**
(43) Date of publication of application: **28.05.2025**
(21) Application number: 24306878.0
(22) Date of filing: 08.11.2024
(51) Int. Cl.: H02G 1/14, H02G 15/08

(54) **ARMOURING WIRE CLAMP JOINT**

(30) Priority: 21.11.2023 NO 20231265
(71) Applicant: Nexans, 92400 Courbevoie (FR)
(72) Inventor: LARSSON, Jonas, 1605 FREDRIKSTAD (NO); JOHANSEN, Ben Kristian, 1779 HALDEN (NO)
(74) Representative: Onsagers AS

(57) **Abstract**

A cable system (1), wherein the cable system (1) comprises a first cable section (2f) comprising first inner layers (2fi) and a plurality of first armouring wires (8) surrounding the first inner layers (2fi), wherein the first cable section (2f) is defined with a first end (2fe); a second cable section (2s) comprising second inner layers (2si) and a plurality of second armouring wires (9) surrounding the second inner layers (2si), wherein the second cable section (2s) is defined with a second end (2se). Wherein the inner layers of the first end (2fe) are joined to the inner layers of the second end (2se) at a joint (3). The cable system (1) comprises a first sleeve (10) comprising a first central bore (12) and a number of first wire holes (32) surrounding the first central bore (12), wherein the first inner layers (2fi) are provided through the first central bore (12) and wherein the first armouring wires (8) are inserted into the first wire holes (32), a second sleeve (20) comprising a second central bore (22) and a number of second wire holes (42) surrounding the second central bore (22), wherein the second inner layers (2si) are provided through the second central bore (22), and wherein the second armouring wires (9) are inserted into the second wire holes (42); first fastening elements (33) for securing the first armouring wires (8) in the first wire holes (32); second fastening elements (43) for securing the second armouring wires (9) in the second wire holes (42) and a securing device (51) for securing the first sleeve (10) and the second sleeve (20) to each other.

## Description

### TECHNICAL FIELD

The present invention relates to a cable system. The present invention also relates to a method for joining a first cable section and a second cable section to each other.

### BACKGROUND

The use or production of electricity offshore is increasing due to offshore installations, islands being connected to a mainland grid and the building of offshore wind turbines. This in turn leads to HV cables being increasingly deployed in deeper waters. The requirements to mechanical strength of the HV cables are increasing to cope with higher dynamic loads such as wave loads but also higher static tensile strength due to increases in weight of the cables. It is common to use high strength steel wires for the armouring layer of HV cables to sustain these loads.

Joining the individual wires of the armouring layer at joints between two cable ends is a challenging operation, as high strength steel is difficult to weld due to the negative effect of welding heat on the material properties. Therefore, mechanical clamping solutions are frequently employed to overcome these problems. This usually leads to a significant increase of the cable diameter at the joint making handling of the cable more difficult.

There is therefore a need for an alternative solution for reliably joining armouring wires of HV cables by reducing or avoiding changing the material properties of the armouring layer and minimizing any increases of the cable diameter at the joint.

### SUMMARY OF THE INVENTION

The present invention relates to a cable system, wherein the cable system comprises:
- a first cable section comprising first inner layers and a plurality of first armouring wires surrounding the first inner layers, wherein the first cable section is defined with a first end;
- a second cable section comprising second inner layers and a plurality of second armouring wires surrounding the second inner layers, wherein the second cable section is defined with a second end;

wherein the inner layers of the first end are joined to the inner layers of the second end at a joint;
characterized in that
   the cable system comprises:
   - a first sleeve comprising a first central bore and a number of first wire holes surrounding the first central bore, wherein the first inner layers are provided through the first central bore and wherein the first armouring wires are inserted into the first wire holes;
   - a second sleeve comprising a second central bore and a number of second wire holes surrounding the second central bore, wherein the second inner layers are provided through the second central bore, and wherein the second armouring wires are inserted into the second wire holes;
   - first fastening elements for securing the first armouring wires in the first wire holes;
   - second fastening elements for securing the second armouring wires in the second wire holes;
   - a securing device for securing the first sleeve and the second sleeve to each other.

The term "a number of' is to be construed as "a plurality of".

In one aspect, the first inner layers are provided through the first central bore adjacent to the joint. In one aspect, the second inner layers are provided through the second central bore adjacent to the joint. In one aspect, the first sleeve is located on a first side of the joint and the second sleeve is located on a second side of the joint.

By securing the armouring wires to the wire holes of the sleeve, and by securing the sleeves to each other by means of the securing device, the armouring wires becomes joined to each other.

In one aspect, increasing load in the armouring wires will increase the clamping force of the fastening elements.

In one aspect, the first sleeve comprises a first flange surrounding the first central bore, wherein the first wire holes are distributed circumferentially in the first flange around the first central bore, and/ or
wherein the second sleeve comprises a second flange surrounding the second central bore, wherein the second wire holes are distributed circumferentially in the second flange around the second central bore.

In one aspect, the orientation of the first wire holes are aligned with the first armouring wires, and / or
wherein the orientation of the second wire holes are aligned with the second armouring wires.

In one aspect, the orientation of the first wire holes are aligned with the first armouring wires to avoid bending of the first armouring wires.

In one aspect, the orientation of the first wire holes are aligned with the first armouring wires adjacent to the first sleeve.

In one aspect, the orientation of the first wire holes are aligned with a helix-shaped orientation of the first armouring wires.

In one aspect, the orientation of the second wire holes are aligned with the second armouring wires to avoid bending of the second armouring wires.

In one aspect, the orientation of the second wire holes are aligned with the second armouring wires adjacent to the second sleeve.

In one aspect, the orientation of the second wire holes are aligned with a helix-shaped orientation of the second armouring wires.

The helix-shaped orientation will typically depend on the number of rotations of the armouring wires around the inner layer per unit of length and a distance between the longitudinal center axis of the cable section and the armouring wires.

In one aspect, the shape of the cross-section of the armouring wires is oval or rectangular with rounded edges.

In one aspect, the number of first wire holes at least corresponds to the number of first armouring wires, and/ or
wherein the number of second wire holes at least corresponds to the number of second armouring wires.

Hence, the first armouring wires are inserted into separate first wire holes and the second armouring wires are inserted into separate second wire holes.

In one aspect, the first wire hole is provided with a first opening facing towards a first collar of the first sleeve and a second opening facing away from the first collar, wherein the first opening has a larger cross sectional area than the second opening, and wherein the first wire hole is at least partially tapered between the first opening and the second opening; and
wherein the second wire hole is provided with a first opening facing towards a second collar of the second sleeve and a second opening facing away from the second collar, wherein the first opening has a larger cross sectional area than the second opening, and wherein the second wire hole is at least partially tapered between the first opening and the second opening.

In one aspect, the wire holes are conical or wedge shaped.

In one aspect, the taper between the first opening and the second opening of the first wire hole is oriented in an orientation of the first armouring wires; and / or
wherein the taper between the first opening and the second opening of the second wire hole is oriented in an orientation of the second armouring wires.

In one aspect, each first fastening element is a first wedging element;
wherein each first wedging element is a cylindrical wedge or a conical wedge; and/or
wherein each second fastening element is a second wedging element;
wherein each second wedging element is a cylindrical wedge or a conical wedge.

As used herein, the term "conical wedge" is a body formed by cutting a solid cone or solid frustrum with a plane placed at an angle oblique to its base. As used herein, the term "cylindrical wedge" is a body formed by cutting a solid cylinder with a plane that intersects the base of the cylinder.

In one aspect, each first wedging element comprises a planar surface provided with serrations, wherein each first armouring wire is engaged with the serrations of its respective first wedging element; and/or
wherein each second wedging element comprises a planar surface provided with serrations, wherein each second armouring wire is engaged with the serrations of its respective second wedging element.

In one aspect, the serrated surfaces improve the engagement between the armouring wire and the wedging element when the armouring wire is tensioned with force F.

Each first wedging element is inserted via the first opening into the respective first wire holes. Each second wedging element is inserted via the first opening into the respective second wire holes.

In one aspect, the cable system comprises at least a first stopper secured to at least an end of the first armouring wires, wherein the at least a first stopper is engaged with at least one of the first wedging elements; and / or
wherein the at least a second stopper is secured to at least an end of the second armouring wires, wherein the at least a second stopper is engaged with at least one of the second wedging elements.

According to the above, the first wedging element is prevented from exiting the first wire hole should the first armouring wire become disengaged from the first wedging element.

According to the above, the second wedging element is prevented from exiting the second wire hole should the second armouring wire become disengaged from the second wedging element.

In one aspect, the first stopper is engaged with an end surface of the first wedging element.

In one aspect, the first stopper is engaged with the end surface of the first wedging element facing towards the first collar.

In one aspect, the second stopper is engaged with an end surface of the second wedging element.

In one aspect, the second stopper is engaged with the end surface of the second wedging element facing towards the second collar.

In one aspect, the cable system comprises:
- one single first wedging element in each first wire hole; and / or
- one single second wedging element in each second wire hole.

In one aspect, the cable system comprises:
- two first wedging elements in at least one of the first wire hole, wherein the two first wedging elements are located on opposite sides of the first armouring wire; and / or
- two second wedging elements in at least one of the second wire hole, wherein the two second wedging elements are located on opposite sides of the second armouring wire.

In one aspect, the first wire holes are arranged as a number of outer first wire holes and a number of inner first wire holes, wherein the outer first wire holes are provided radially outside of the inner first wire holes;
wherein the first cable section comprises outer first armouring wires and inner first armouring wires, wherein the outer first armouring wires are provided radially outside of the inner first armouring wires;
wherein the outer first armouring wires are inserted into the outer first wire holes and wherein the inner first armouring wires are inserted into the inner first wire holes; and / or
wherein the second wire holes are arranged as a number of outer second wire holes and a number of inner second wire holes, wherein the outer second wire holes are provided radially outside of the inner second wire holes;
wherein the second cable section comprises outer second armouring wires and inner second armouring wires, wherein the outer second armouring wires are provided radially outside of the inner second armouring wires;
wherein the outer second armouring wires are inserted into the outer second wire holes and wherein the inner second armouring wires are inserted into the inner second wire holes.

In one aspect, the helix-shaped orientation of the outer first armouring wires is different from the helix-shaped orientation of the inner first armouring wires.

In one aspect, the helix-shaped orientation of the outer second armouring wires is different from the helix-shaped orientation of the inner second armouring wires.

In one aspect, the cable system comprises a temporary tensioning system comprising:
- a first supporting element for engaging the first flange;
- a second supporting element for engaging the second flange;
- a tensioning element for engaging the first collar and the second collar for moving the first supporting element and the second supporting element in a direction towards each other, thereby moving the first sleeve relative to, and towards, the second sleeve;
wherein the securing device is secured to the first collar and to the second collar when the temporary tensioning system has moved the first sleeve to a desired position relative to the second sleeve.

In one aspect, the first sleeve comprises a socket and wherein the second sleeve comprises a spigot inserted into the socket.

The socket/spigot contributes to maintain the first flange in parallel with the second flange and contributes to aligning a longitudinal centre axis of the first sleeve with a longitudinal centre axis of the second sleeve, both during use of the temporary tensioning system and after the securing device has been secured to the first collar and to the second collar.

The present invention also relates to a method for joining a first cable section and a second cable section to each other, wherein the method comprises the following steps:
- inserting first inner layers of the first cable section through a first central bore of a first sleeve;
- inserting second inner layers of the second cable section through a second central bore of a second sleeve;
- joining the first inner layers of the first cable section to the second inner layers of the second cable section at a joint;
- inserting first armouring wires into first wire holes of the first sleeve;
- inserting first fastening elements into the first wire holes to secure the first armouring wires to the first sleeve;
- inserting second armouring wires into second wire holes of the second sleeve;
- inserting second fastening elements into the second wire holes to secure the second armouring wires to the second sleeve;
- securing the first sleeve to second sleeve.

In one aspect, one first armouring wire is inserted into one first wire hole at a time and secured with at least one first fastening element.

In one aspect, one second armouring wire is inserted into one second wire hole at a time and secured with at least one second fastening element.

In one aspect, the method comprises:
- securing at least a first stopper to at least an end of the first armouring wires, wherein the at least a first stopper is engaged with the at least a first fastening element; and / or
- securing at least a second stopper to at least an end of the second armouring wires, wherein the at least a second stopper is engaged with the at least a second fastening element.

In one aspect, the method comprises:
- providing a temporary tensioning system comprising a first supporting element for engaging a first collar of the first sleeve and a second supporting element for engaging a second collar of the second sleeve and a tensioning element;
- tensioning the tensioning element for moving the first supporting element and the second supporting element in a direction towards each other, thereby moving the first sleeve relative to, and towards, the second sleeve;
wherein the step of securing the first sleeve to the second sleeve comprises attaching a securing device to the first collar and to the second collar when the temporary tensioning system has moved the first sleeve to a desired position relative to the second sleeve.

### DETAILED DESCRIPTION

Fig 1 - illustrates the cable sections with inner layers and armouring wires;
Fig 2 - illustrates the assembled cable joint;
Fig 3a illustrates a first flange with a first cable and inner and outer armouring wire attached;
Fig. 3b illustrates a second flange with a second cable and inner and outer armouring wire attached;
Fig 3c - illustrates a front view of the first flange showing the bore and wire holes;
Fig 3d - illustrates a front view of the second flange showing the bore and wire holes;
Fig 4a - illustrates a cross-section of the through hole shown in the dashed area A-A in fig. 2;
Fig 4b - illustrates a cross-section of the through hole shown in the dashed area B-B in fig. 2;
Fig. 5a - illustrates a first and second flange with inner armouring wire before a securing device is applied;
Fig. 5b - illustrates a first and second flange with inner and outer armouring wire before a clamp is applied;
Fig 6 - illustrates schematically a vertical cross-section of the new cable system;
Fig. 7 - illustrates a temporary tensioning tool for holding the first and second flange prior to applying the securing device;
Fig. 8a - illustrates a perspective view of a wedge element for securing armouring wires;
Fig. 8b - illustrates a side view of the wedge element in fig. 8a;
Fig. 9a - illustrates a perspective view of a stopper;
Fig. 9b - illustrates a cross-section of the stopper along line A-A of fig. 9a.

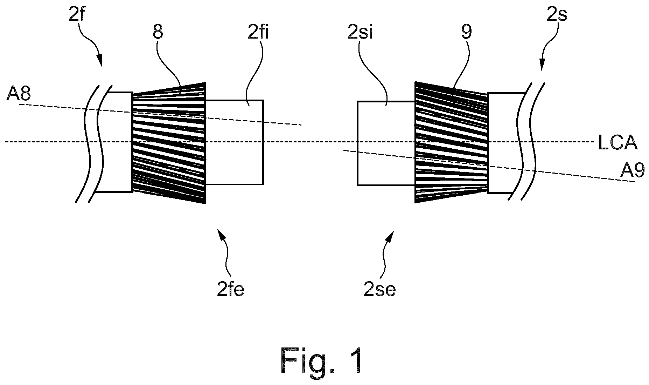

It is now referred to fig. 1. Here it is shown a first cable section 2f with a first cable end 2fe aligned with a second cable section 2f with a second cable end 2se along a common longitudinal center axis LCA.

The first cable section 2f comprises a first inner layer 2fi and first armouring wires 8 surrounding the first inner layers 2fi. The second cable section 2s comprises a second inner layer 2si and second armouring wires 8 surrounding the second inner layers 2si. The first inner layers 2fi and the second inner layers 2si each comprises a central conductor, an inner semiconductive layer surrounding the conductor, an insulating layer surrounding the inner semiconductive layer and an outer semiconductive layer surrounding the insulating layer. These armouring wires 8, 9 are typically provided helically around the inner layers 2fi, 2si. In fig. 1, it is shown that the first armouring wires 8 have been moved away from the first inner layers 2fi at the first end 2fe and that each armouring wire 8 has been straightened as indicated by a longitudinal axis A8 for one of the first armouring wires 8. Similarly, the second armouring wires 9 have been moved away from the second inner layers 2si at the second end 2fe and have been straightened, as indicated by a longitudinal axis A9 for one of the second armouring wires 9.

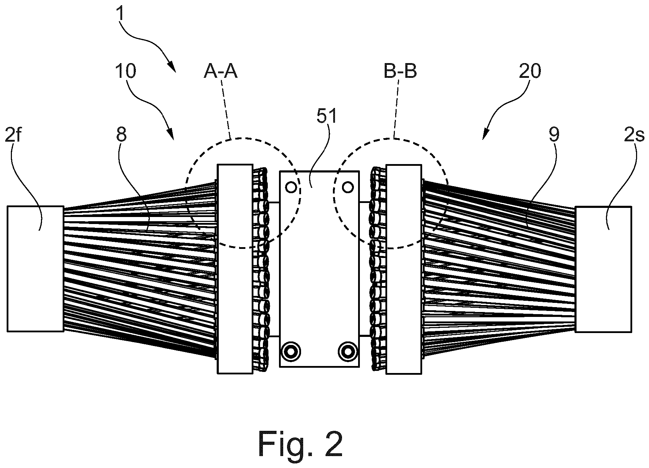

It is now referred to fig. 2. Here it is shown a cable system 1, comprising the above first cable section 2f and the above second cable section 2s being jointed to each other. In particular, the first cable section 2f and the above second cable section 2s have been jointed to each other by means of a first sleeve 10, a second sleeve 120 and a securing device 51, which will be described further in detail below.

### The first sleeve 10 and the second sleeve 20

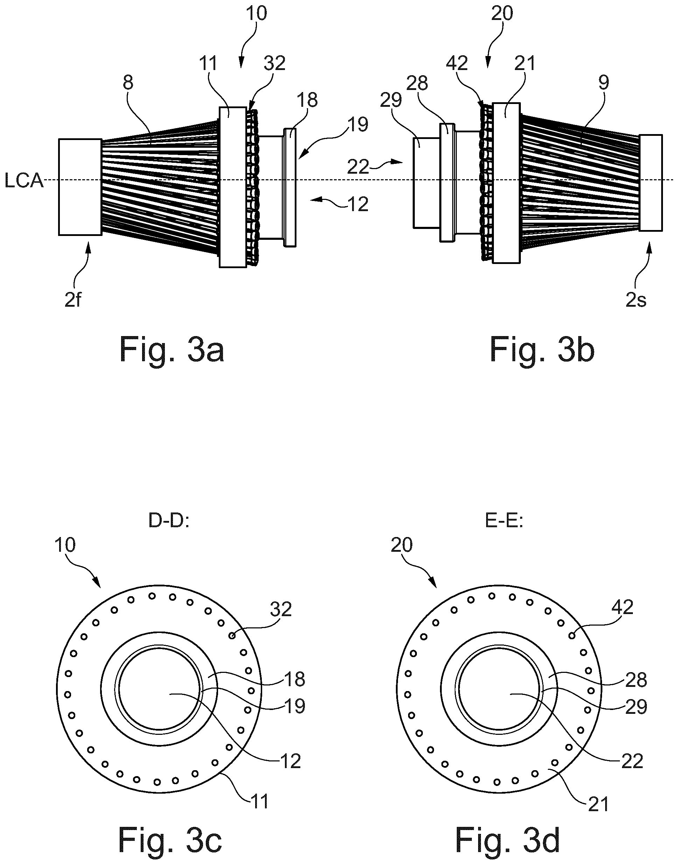

As shown in fig.3a and 3c, the first sleeve 10 comprises a first flange 11 at a first end of the first sleeve 10 and a first collar 18 at a second end of the first sleeve 10. The first sleeve 10 comprises a first central bore 12 adapted to receive the inner layers 2fi. In addition, the first sleeve 10 comprises a number of first wire holes 32 provided in the first flange 11 adapted to receive the first armouring wires 8. The first wire holes 32 are distributed circumferentially in the first flange 11 around the first central bore 12. In the present embodiment, there are as many first wire holes 32 as there are first armouring wires 8.

As shown in fig. 3c and 3d, the second sleeve 20 comprises a second flange 21 at a second end of the second sleeve 20 and a second collar 28 at a second end of the second sleeve 20. The second sleeve 20 comprises a second central bore 22 adapted to receive the inner layers 2si. In addition, the second sleeve 20 comprises a number of second wire holes 42 provided in the second flange 21 adapted to receive the second armouring wires 9. The second wire holes 42 are distributed circumferentially in the second flange 21 around the second central bore 22. In the present embodiment, there are as many second wire holes 42 as there are second armouring wires 9.

In fig. 3a and fig. 3b it is further shown that the first sleeve 10 also comprises a socket 19 provided as a section of the first central bore 12 having a larger diameter than the rest of the first central bore 12. The second sleeve 20 comprises a spigot 29 for insertion into the socket 19. By inserting the spigot 19 into the socket 19, the first sleeve 10 become aligned with the second sleeve 20 along the longitudinal center axis LCA. In addition, the socket 19 and the spigot 29 help to keep the first flange 11 parallel with the second flange 21 and make the connection between the first sleeve 10 and the second sleeve 20 more resistant against bending.

The collars 18, 28 are used to secure the first sleeve 10 to the second sleeve 20 by means of the securing device 51. This will be described further in detail below.

The sleeves 10, 20 are made of metal, for example machined from steel or stainless steel or may be fabricated by 3D printing. They are protected against corrosion by for example a coating of zinc and / or bitumen.

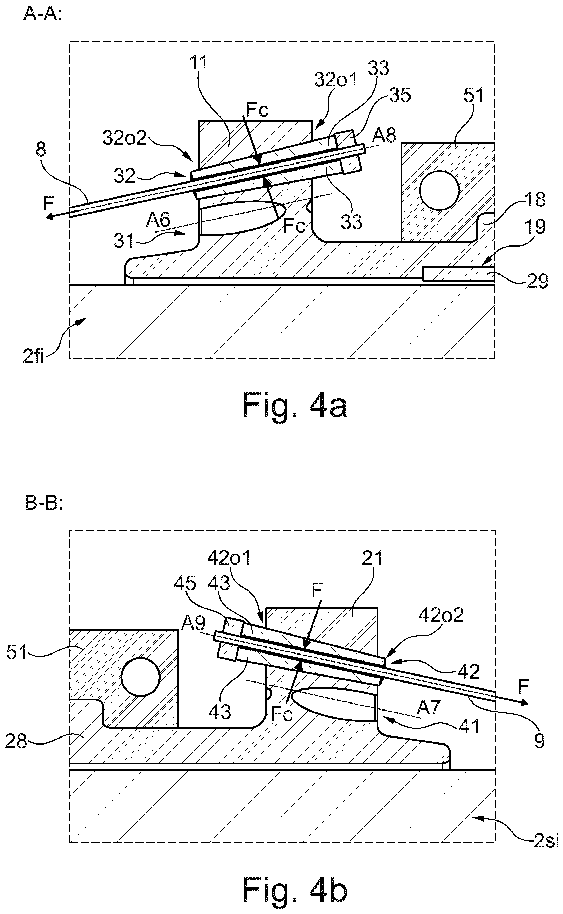

As shown in figures 4a and 4b, the first wire holes 32 are aligned with the straightened first armouring wires 8 and the second wire holes 42 are aligned with the straightened second armouring wires 9, again as indicated by orientation axis A8, A9. Aligning the orientation of the first armouring wires 8 and second armouring wires 9 with the orientation of the first wire holes 32 and second wire holes 42 minimizes the need for bending of the first armouring wires 8 and second armouring wires 9. The orientation of the first armouring wires 8 and second armouring wires 9 follows a helix-shaped orientation and is a result of the properties of the cable sections. Hence, also the wire holes 22, 42 are oriented based on the properties of the cable sections being jointed.

In the present embodiment, the first and second wire holes 32, 42 are conical. As shown in fig. 4a, the first wire holes 32 are provided with a first opening 32o1 facing towards the first collar 18. A second opening 32o2 is facing away from the first collar 18. The first opening 32o1 has a larger cross-sectional area than the second opening 32o2.

Fig. 4b shows that the second wire holes 42 are provided with a first opening 42o1 facing towards the second collar 28 and a second opening 42o2 facing away from the second collar 28. The first opening 42o1 has a larger cross-sectional area than the second opening 42o2.

### Second embodiment of first sleeve 10 and second sleeve 20

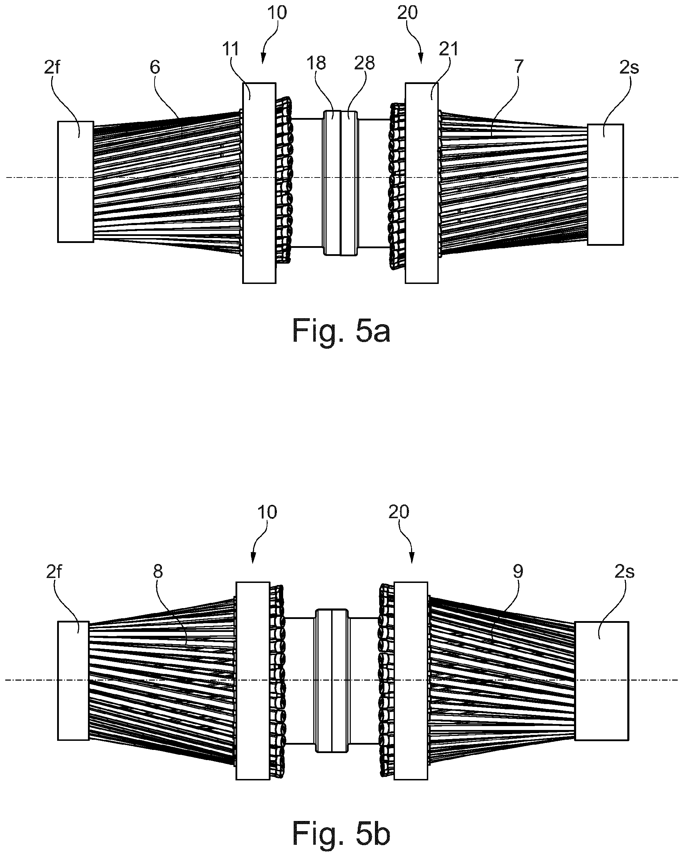

A further embodiment of the first sleeve 10 and the second sleeve 20 will now be described with reference to figures 4a, 4b, 5a and 5b. This embodiment corresponds to the first embodiment and only differences between the first and the further embodiment are described in detail.

It should be noted that in the first embodiment, the cable sections 2f, 2s has one single layer of armouring wires 8, 9.

It is now referred to figures 5a and 5b. The first cable section 2f here comprises two layers of armouring wires: outer first armouring wires 8 and inner first armouring wires 6. The outer first armouring wires 8 are provided radially outside of the inner first armouring wires 6. The second cable section 2s also comprises outer second armouring wires 9 and inner second armouring wires 7 with the outer second armouring wires 9 provided radially outside of the inner second armouring wires 7.

Shown in figures 5a and 5b is that the outer first and second armouring wires 8, 9 have the same orientation. Also, the orientation of the inner first and second armouring wires 6, 7 is the same. It is also notated that the orientation of the inner first and second armouring wires 6, 7 is different from the orientation of the outer first and second armouring wires 8, 9.

With two layers of armouring wires, the arrangement of the wire holes 32, 42 in the flanges 11, 21 is adapted to receive armouring wires from the inner layers and the outer layers. As shown in fig. 4a, there is an outer first wire hole 32 and an inner first wire hole 31. The outer first wire hole 32 is provided radially outside of the inner first wire hole 31. In fig. 4b it is shown that there is an outer second wire hole 42 and an inner second wire hole 41. The outer second wire hole 42 is provided radially outside of the inner second wire hole 41.

Also shown in fig. 4a is orientation A8 of the outer first armouring wires 8 and their corresponding wire hole 32 and orientation A6 of the inner first armouring wires and their corresponding wires holes 31. Fig. 4b shows the orientation A9 of the outer second armouring wires 9 and their corresponding wires holes 42 and orientation A7 of the inner second armouring wires 7 and their corresponding wire hole 41.

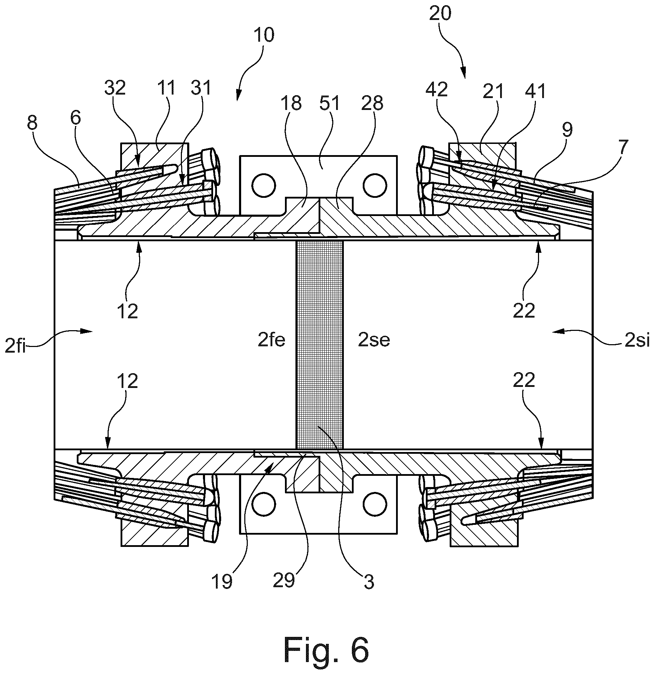

It is now referred to fig. 6. The outer first armouring wires 8 are inserted into the outer first wire holes 32 while inner first armouring wires 6 are inserted into the inner first wire holes 31. Furthermore, the outer second armouring wires 9 are inserted into the outer second wire holes 42 and while the inner second armouring wires 7 are inserted into the inner second wire holes 41.

### Attachment of armouring wires to the first and second sleeves

The armouring wires are attached to the flanges 11, 21 by using first wedging elements 33 and second wedging elements 43. It is now referred to figures 4a and 4b. Each first wedging element 33 is inserted via the first opening 32o1 into the respective first wire holes 32. Each second wedging element 43 is inserted via the first opening 42o1 into the respective second wire holes 42.

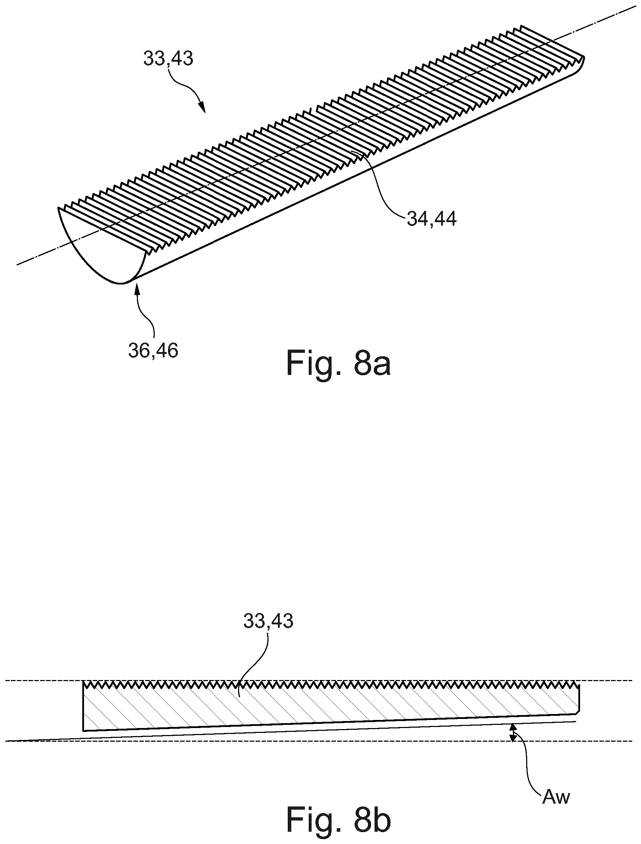

The wedging elements 33 and 43 are cylindrical or conical wedges as shown in figures 8a and 8b. The wedging elements 33 and 43 have a planar surface 34 and 44 that engages with the armouring wires 8 and 9 and a cylindrical surface 36 and 46 that engages the surface of the wire hole 32 or 42. Typically, the planar surface of the wedging elements 33 and 43 is serrated to provide better engagement with the armouring wires 8, 9.

When tensile load F in the armouring wires is increased, the planar surface towards the armouring wires and the cylindrical surface of the wedging element towards the wire hole, ensure, that there will be a tighter grip of the armouring wires.

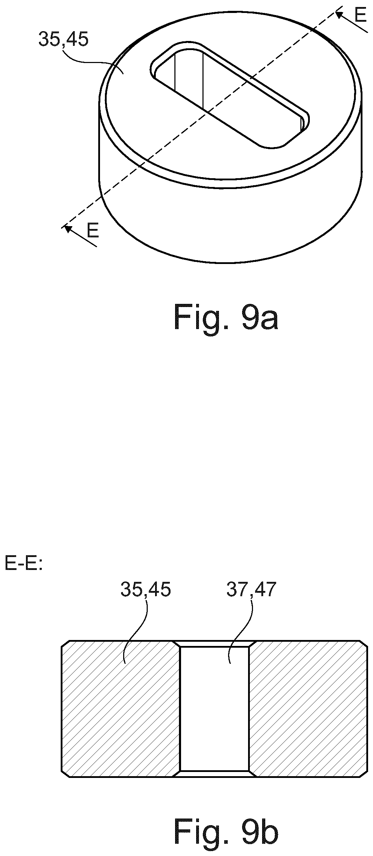

To avoid that wedging elements 34,44 become loose and fall out of the first openings 32o1, 42o1, a first stopper 35 and a second stopper 45 (see figures 9a and 9b), are attached to the end of their respective armouring wires. Fig. 4a shows the first stopper 35 being secured to an end of the first armouring wire 8 and engaged with the first wedging element 33. Fig 4b shows the same for a second stopper 45 secured to an end of the second armouring wire 9 and engaged with the second wedging element 43. The same arrangement applies to the embodiment of the sleeves 10 and 20 with inner and outer armouring wires.

In a first embodiment, not shown in the figures, one single first wedging element 33 is inserted into each wire hole 32 and / or one single second wedging element 43 is inserted into each second wire hole 42.

In a further embodiment, two wedging elements are inserted in each wire hole. As shown in fig 4a, two first wedging elements 33 are inserted into each first wire hole 32, the two first wedging elements 33 being located on opposite sides of the first armouring wire 8. Similarly, as shown in fig. 4b, two second wedging elements 43 are inserted into each second wire hole 42, the two second wedging elements 43 are located on opposite sides of the second armouring wire 9.

### A method for joining cable sections

Now, the method for joining the first cable section 2f and the second cable section 2s to each other is described.

First, as shown in fig. 6, the first inner layer 2fi is fed through the first bore 12 of the first sleeve 10 while the second inner layer 2si is fed through the second bore 22 of the second sleeve 20. The first and second inner layers 2fi and 2si are then jointed to each other to form a joint 3. The jointing process of the inner layers are considered well known and will not be described further in detail herein.

Then, the first armouring wires 8 are inserted into the first wire holes 32. To secure the armouring wires 8 in the first wire holes 32, first wedging elements 33 are inserted into the first wire holes 32.

Similarly, the second armouring wires 9 are inserted into the second wire holes 42. To secure the armouring wires 9 in the first wire holes 42, second wedging elements 43 are inserted into the second wire holes 42.

Then, first and second stoppers 35, 45 are secured to the end of the armouring wires 8, 9 to engage the first and second wedging elements 35, 45.

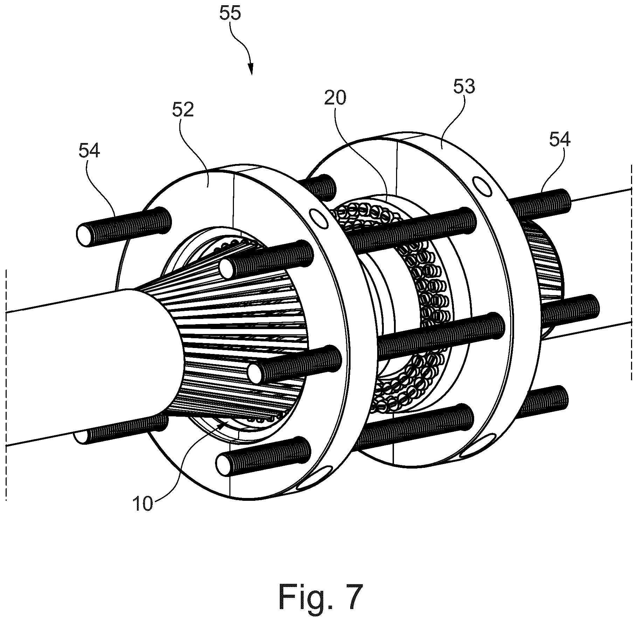

In a final step, the first sleeve 10 is secured to the second sleeve 20. Here, a tensioning system 55 is used as shown in fig 7. It comprises a first supporting element 52 for engaging the first flange 11 and a second supporting element 53 for engaging the second flange 21. The supporting elements can be made up of two or more sections that are mechanically connected, by for example bolting. Tensioning elements 54 more the first supporting element 52 and the second supporting element 53 in a direction towards each other, thereby moving the first sleeve 10 relative to, and towards, the second sleeve 20. Once the two sleeves 10 and 20 have come to the desired position, the securing device 51 is attached, mechanically connecting the first collar 18 and the second collar 28.

### LIST OF REFERENCE NUMBERS

1 - cable system
2f - first cable section
2fe - first end
2fi - first inner layer
2s - second cable section
2se - second end
2si - second inner layer
3 - joint
6 - inner first armouring wires
7 - inner second armouring wires
8 - (outer) first armouring wire
9 - (outer) second armouring wires
10 - first sleeve
11 - first flange
12 - first central bore
18 - first collar
19 - socket
20 - second sleeve
21 - second flange
22 - second central bore
28 - second collar
29 - spigot
31 - inner first wire holes
32 - (outer) first wire holes
32o1 - first opening
32o2 - second opening
33 - first wedging element
34 - planar surface
35 - first stopper
36 - cylindrical surface
41 - inner second wire holes
42 - (outer) second wire holes
42o1 - first opening
42o2 - second opening
43 - second wedging element
44 - planar surface
45 - second stopper
46 - cylindrical surface
51 - securing device
52 - first supporting element
53 - second supporting element
54 - tensioning element
55 - temporary tensioning system
A8 - orientation A8 of the first armouring wires 8
A9 - orientation A9 of the second armouring wires 9.
LCA - longitudinal centre axis of the cable

## Claims

1. A cable system (1), wherein the cable system (1) comprises:
- a first cable section (2f) comprising first inner layers (2fi) and a plurality of first armouring wires (8) surrounding the first inner layers (2fi), wherein the first cable section (2f) is defined with a first end (2fe);
- a second cable section (2s) comprising second inner layers (2si) and a plurality of second armouring wires (9) surrounding the second inner layers (2si), wherein the second cable section (2s) is defined with a second end (2se);
wherein the inner layers of the first end (2fe) are joined to the inner layers of the second end (2se) at a joint (3);
**characterized in that**
the cable system (1) comprises:
- a first sleeve (10) comprising a first central bore (12) and a number of first wire holes (32) surrounding the first central bore (12), wherein the first inner layers (2fi) are provided through the first central bore (12) and wherein the first armouring wires (8) are inserted into the first wire holes (32);
- a second sleeve (20) comprising a second central bore (22) and a number of second wire holes (42) surrounding the second central bore (22), wherein the second inner layers (2si) are provided through the second central bore (22), and wherein the second armouring wires (9) are inserted into the second wire holes (42);
- first fastening elements for securing the first armouring wires (8) in the first wire holes (32);
- second fastening elements for securing the second armouring wires (9) in the second wire holes (42);
- a securing device (51) for securing the first sleeve (10) and the second sleeve (20) to each other.

2. The cable system (1) according to claim 1,
wherein the first sleeve (10) comprises a first flange (11) surrounding the first central bore (12), wherein the first wire holes (32) are distributed circumferentially in the first flange (11) around the first central bore (12), and/ or
wherein the second sleeve (20) comprises a second flange (21) surrounding the second central bore (22), wherein the second wire holes (42) are distributed circumferentially in the second flange (21) around the second central bore (22).

3. The cable system (1) according to claims 1 or 2,
wherein the orientation of the first wire holes (32) are aligned with the first armouring wires (8), and / or
wherein the orientation of the second wire holes (42) are aligned with the second armouring wires (9).

4. The cable system (1) according to any one of the previous claims, wherein the number of first wire holes (32) at least corresponds to the number of first armouring wires (8), and/ or
wherein the number of second wire holes (42) at least corresponds to the number of second armouring wires (9).

5. The cable system (1) according to any one of the previous claims, wherein the first wire hole (32) is provided with a first opening (32o1) facing towards a first collar (18) of the first sleeve (10) and a second opening (32o2) facing away from the first collar (18), wherein the first opening (32o1) has a larger cross sectional area than the second opening (32o2), and wherein the first wire hole (32) is at least partially tapered between the first opening (32o1) and the second opening (32o2); and
wherein the second wire hole (42) is provided with a first opening (42o1) facing towards a second collar (28) of the second sleeve (20) and a second opening (42o2) facing away from the second collar (28), wherein the first opening (42o1) has a larger cross sectional area than the second opening (42o2), and wherein the second wire hole (42) is at least partially tapered between the first opening (42o1) and the second opening (42o2).

6. The cable system (1) according to claim 5,
wherein the taper between the first opening (32o1) and the second opening (32o2) of the first wire hole (32) is oriented in an orientation (A8) of the first armouring wires (8); and / or
wherein the taper between the first opening (42o1) and the second opening (42o2) of the second wire hole (42) is oriented in an orientation (A9) of the second armouring wires (9).

7. The cable system (1) according to anyone of the previous claims,
wherein each first fastening element is a first wedging element (33); wherein each first wedging element (33) is a cylindrical wedge or a conical wedge; and/or wherein each second fastening element is a second wedging element (43);
wherein each second wedging element (43) is a cylindrical wedge or a conical wedge.

8. The cable system (1) according to claim 7, wherein each first wedging element (33) comprises a planar surface (34) provided with serrations, wherein each first armouring wire (8) is engaged with the serrations of its respective first wedging element (33); and/or
wherein each second wedging element (43) comprises a planar surface (44) provided with serrations, wherein each second armouring wire (9) is engaged with the serrations of its respective second wedging element (43).

9. The cable system (1) according to claims 7 or 8,
wherein the cable system (1) comprises at least a first stopper (35) secured to at least an end of the first armouring wires (8), wherein the at least a first stopper (35) is engaged with at least one of the first wedging elements (33); and / or
wherein at least a second stopper (45) is secured to at least an end of the second armouring wires (9), wherein the at least a second stopper (45) is engaged with at least one of the second wedging elements (43).

10. The cable system (1) according to any one of claims 7 to 9,
wherein the cable system (1) comprises:
- one single first wedging element (33) in each first wire hole (32); and / or
- one single second wedging element (43) in each second wire hole (42).

11. The cable system (1) according to any one of claims 7 to 9,
wherein the cable system (1) comprises:
- two first wedging elements (33) in at least one of the first wire hole (32), wherein the two first wedging elements are located on opposite sides of the first armouring wire (8); and / or
- two second wedging elements (43) in at least one of the second wire hole (42),
wherein the two second wedging elements are located on opposite sides of the second armouring wire (9).

12. The cable system (1) according to anyone of the previous claims,
wherein the first wire holes (32) are arranged as a number of outer first wire holes (32) and a number of inner first wire holes (31), wherein the outer first wire holes (32) are provided radially outside of the inner first wire holes (31);
wherein the first cable section (2f) comprises outer first armouring wires (8) and
inner first armouring wires (6), wherein the outer first armouring wires (8) are provided radially outside of the inner first armouring wires (6);
wherein the outer first armouring wires (8) are inserted into the outer first wire holes (32) and wherein the inner first armouring wires (6) are inserted into the inner first wire holes (31); and / or
wherein the second wire holes (42) are arranged as a number of outer second wire holes (42) and a number of inner second wire holes (41), wherein the outer second wire holes (42) are provided radially outside of the inner second wire holes (41); wherein the second cable section (2s) comprises outer second armouring wires (9) and inner second armouring wires (7), wherein the outer second armouring wires (9) are provided radially outside of the inner second armouring wires (7);
wherein the outer second armouring wires (9) are inserted into the outer second wire holes (42) and wherein the inner second armouring wires (7) are inserted into the inner second wire holes (41).

13. The cable system (1) according to anyone of the previous claims, wherein the cable system (1) comprises a temporary tensioning system (55) comprising:
- a first supporting element (52) for engaging the first flange (11);
- a second supporting element (53) for engaging the second flange (21);
- a tensioning element (54) for engaging the first collar (18) and the second collar (28) for moving the first supporting element (52) and the second supporting element (53) in a direction towards each other, thereby moving the first sleeve (10) relative to, and towards, the second sleeve (20);
wherein the securing device (51) is secured to the first collar (18) and to the second collar (28) when the temporary tensioning system (55) has moved the first sleeve (10) to a desired position relative to the second sleeve (20).

14. The cable system (1) according to anyone of the previous claims, wherein the first sleeve (10) comprises a socket (19) and wherein the second sleeve (20) comprises a spigot (29) inserted into the socket (19).

15. A method for joining a first cable section (2f) and a second cable section (2s) to each other, wherein the method comprises the following steps:
- inserting first inner layers (2fi) of the first cable section (2f) through a first central bore (12) of a first sleeve (10);
- inserting second inner layers (2si) of the second cable section (2s) through a second central bore (22) of a second sleeve (20);
- joining the first inner layers (2fi) of the first cable section (2f) to the second inner layers (2si) of the second cable section (2s) at a joint (3);
- inserting first armouring wires (8) into first wire holes (32) of the first sleeve (10);
- inserting first fastening elements (33) into the first wire holes (32) to secure the first armouring wires (8) to the first sleeve (10);
- inserting second armouring wires (9) into second wire holes (42) of the second sleeve (20);
- inserting second fastening elements (43) into the second wire holes (42) to secure the second armouring wires (9) to the second sleeve (20);
- securing the first sleeve (10) to second sleeve (20).

16. The method according to claim 15, wherein the method comprises:
- securing at least a first stopper (35) to at least an end of the first armouring wires (8), wherein the at least a first stopper (35) is engaged with the at least a first fastening element (33); and / or
- securing at least a second stopper (45) to at least an end of the second armouring wires (9), wherein the at least a second stopper (45) is engaged with the at least a second fastening element (43).

17. The method according to claims 15 or 16, wherein the method comprises:
- providing a temporary tensioning system (55) comprising a first supporting element (52) for engaging a first collar (18) of the first sleeve (10) and a second supporting element (53) for engaging a second collar (28) of the second sleeve (20) and a tensioning element (54);
- tensioning the tensioning element (54) for moving the first supporting element (52) and the second supporting element (53) in a direction towards each other, thereby moving the first sleeve (10) relative to, and towards, the second sleeve (20); wherein the step of securing the first sleeve (10) to the second sleeve (20) comprises attaching a securing device (51) to the first collar (18) and to the second collar (28) when the temporary tensioning system (55) has moved the first sleeve (10) to a desired position relative to the second sleeve (20).
